# EUROPÄISCHE PATENTANMELDUNG

(11) **EP 2 264 339 A1**
(43) Veröffentlichungstag der Anmeldung: **22.12.2010**
(21) Anmeldenummer: 10152478.3
(22) Anmeldetag: 03.02.2010
(51) Int. Cl.: F16J 15/10, F16J 15/12, F16L 25/01, H05K 9/00

(54) **Dichtung und Verfahren zur Herstellung derselben**

(30) Priorität: 08.05.2009 AT 2972009
(71) Anmelder: NeoTecha GmbH, 4600 Wels (AT)
(72) Erfinder: Gitterle, Andreas, 4609, Thalheim (AT)
(74) Vertreter: Staudt, Armin Walter

(57) **Zusammenfassung**

Die vorliegende Erfindung betrifft eine Dichtung zum Einbau zwischen jedweder Flanschverbindung von Rohren, mit oder ohne Zwischeneinbauten, welche gegenüber herkömmlichen Dichtungen der gattungsgemäßen Art eine leitfähige Verbindung zwischen den einzelnen Bauteilen ermöglicht, wodurch die zusätzliche Herstellung einer Erdung entfallen kann. Hierzu besitzt der einstückige Dichtungsgrundkörper (1) mindestens eine, bevorzugt jedoch mehrere, über die Dichtfläche verteilte Ausnehmungen, in welche elektrisch leitfähige Einlagerungen (2) eingebracht sind. In einer bevorzugten Ausführungsform weist der Dichtungsgrundkörper (1) eine angeformte Erweiterung (3) auf, welche mit einer Markierung (4) versehen ist, damit im montierten Zustand der Dichtung zweifelsfrei erkennbar ist, dass diese Dichtung elektrisch leitfähige Einlagerungen (2) besitzt.

## Beschreibung

Die vorliegende Erfindung betrifft eine Dichtung zum Einbau zwischen Flanschen einer Flanschverbindung von Rohren, umfassend einen eine Oberseite und eine Unterseite aufweisenden, einstückig ausgebildeten Dichtungsgrundkörper aus einem elektrisch isolierenden Material mit dichtender Eigenschaft, der von mindestens einer elektrisch leitfähigen Einlagerung zwischen Oberseite und Unterseite durchzogen ist.

Weiterhin betrifft die Erfindung ein Verfahren zur Herstellung einer Dichtung zum Einbau zwischen Flanschen einer Flanschverbindung von Rohren.

Die Dichtung als leitfähige Verbindung mit dichtender Eigenschaft zum Einbau zwischen jedweder Flanschverbindung von Rohren, auch solcher zwischen Rohren mit leitfähiger Auskleidung, mit oder ohne Zwischeneinbauten wie beispielsweise Instrumentenstutzen, Armaturen, Sandwicharmaturen, Steck- oder Lochscheiben, zeichnet sich dadurch aus, dass sie gegenüber herkömmlichen Dichtungen eine leitfähige Verbindung zwischen den einzelnen Flanschbauteilen ermöglicht, wodurch die zusätzliche Herstellung einer Erdung entfallen kann.

Die erfindungsgemäße Dichtung kann bei jeder Flanschverbindung von Rohren mit oder ohne Zwischeneinbauten zur Anwendung kommen. Beispielhaft wird in der folgenden Beschreibung zur Vereinfachung nur auf lösbare Steck- und/oder Lochscheiben Bezug genommen.

### Stand der Technik

Lösbare Steck- und/oder Lochscheiben werden bei Flanschverbindungen zweier Rohre an chemischen Anlagen eingesetzt. Dabei wird die Steck- oder Lochscheibe zwischen die Flansche montiert und damit gegebenenfalls der Durchgang gesperrt. Die Steck- oder Lochscheibe wird dabei gegenüber dem jeweiligen Flansch mit ringförmigen Rohrleitungsdichtungen abgedichtet. Derartige Dichtungen sind Handelsware und bestehen beispielsweise aus Polytetrafluorethylen (PTFE), gefüllten PTFE-Materialien, expandiertem PTFE oder vergleichbarem Kunststoff. Diese herkömmlichen Dichtungen besitzen elektrisch isolierende Eigenschaften und trennen die Steck- oder Lochscheiben elektrisch vom Rest der geerdeten Armatur. Da die Steck- oder Lochscheiben keinen Kontakt mit den Schrauben der Flanschverbindung haben, müssen sie extra geerdet werden, indem sie mittels Erdungskabel und Rohrschelle mit der Rohrleitung verbunden werden. Diese Erdung der Steck- oder Lochscheibe ist notwendig, um mögliche Spannungen zwischen der Steck- oder Lochscheibe und der Rohrleitung ausgleichen zu können.

Diese Erdungskabel sind relativ lang und daher unpraktisch für die Monteure, da die Gefahr besteht, dass man sich darin verfängt. Ein weiteres Problem besteht darin, dass bei diesen Arbeiten das Kabel an der Anschlussstelle seinen Kontakt verlieren kann. Die Leitfähigkeit der Kabelverbindung muss daher bei jedem Umstecken der Steck- oder Lochscheibe neuerlich überprüft werden.

Der Anschluss der Steck- oder Lochscheibe an die Kabelverbindung zur Rohrleitung und die Überprüfung der Leitfähigkeit verursachen einen hohen Montageaufwand und eine lange Produktionsunterbrechung. Zudem stellen die Rohrschellen, mit welchen das Kabel an den Rohrleitungen fixiert ist, eine große Verletzungsgefahr für die Monteure dar. Die Rohrschellen sind scharfkantig, bei der Montage der Verbindungskabel von der Steck- oder Lochscheibe zum Leitungsrohr kommt es daher häufig zu Schnittverletzungen.

Aus der WO 2008/008255 A2 ist eine Dichtung der eingangs genannten Gattung bekannt. Diese besteht aus einem ringförmigen Dichtungsgrundkörper aus Gummi, Teflon oder anderen dichtenden Substanzen, in den metallische Kontakte eingelagert sind. Der Dichtungsgrundkörper weist an seiner Oberseite und an seiner Unterseite Ausnehmungen auf. Die metallischen Kontakte strecken sich durch den Dichtungsgrundkörper von dessen Unterseite bis zu dessen Oberseite hindurch, wobei die Enden in Bürstenform ausgebildet sind, die in die Ausnehmungen der Oberseite bzw. der Unterseite biegbar hineinragen.

Die metallischen Kontakte bestehen aus gold-, silber- oder nickelbeschichteten Stahlfedern und werden bei der Herstellung des Grundkörpers in diesen eingebettet. Die Herstellung der Dichtung erfordert eine Positionierung und Justierung der metallischen Kontakte in der Form zur Herstellung des Dichtungsgrundkörpers. Dies ist relativ aufwendig und beim Eingießen des Dichtungsgrundkörpermaterials in die Form kann es unvorhersehbar zu Verschiebungen und Verformungen kommen.

### Technische Aufgabenstellung

Die vorliegende Erfindung stellt sich daher die Aufgabe, eine Steck- und/oder Lochscheibendichtung der gattungsgemäßen Art derart weiter zu bilden, dass die genannten Nachteile des Standes der Technik zuverlässig vermieden werden, insbesondere soll der Montageaufwand erheblich reduziert und die Verletzungsgefahr durch scharfkantige Rohrschellen zuverlässig vermieden werden.

Weiterhin liegt der Erfindung die Aufgabe zugrunde, ein Verfahren anzugeben, mittels dem eine derartige Dichtung mit geringem Aufwand und in reproduzierbarer Qualität herstellbar ist.

Hinsichtlich der Dichtung wird diese Aufgabe ausgehend von einer Dichtung der eingangs genannten Gattung erfindungsgemäß dadurch gelöst, dass der Dichtungsgrundkörper eine ausgestanzte, ausgefräste oder ausgebohrte durchgehende Ausnehmung besitzt, in welche raumfüllend die elektrisch leitende Einlagerung zur Herstellung der elektrisch leitenden Verbindung zwischen einer Oberseite und einer Unterseite eingefügt ist.

In dem einstückigen Dichtungsgrundkörper ist mindestens eine durchgehende Ausnehmung vorgesehen. Diese wird beispielsweise durch Ausstanzen oder Ausbohren aus dem Grundkörper hergestellt, und mit einem gut elektrisch leitfähigen Material raumfüllend ausgefüllt.

Vorzugsweise sind in Umfangsrichtung des Dichtungsgrundkörpers an einer oder mehreren geeigneten Stellen mehrere Ausnehmungen mit den entsprechenden Einlagerungen vorgesehen.

Das Material der elektrisch leitenden Einlagerung besteht in einer bevorzugten Ausführung der Erfindung aus PTFE-Kunststoff mit eingelagertem Kohlenstoff. Bevorzugt liegt der Anteil des eingelagerten Kohlenstoffes bei etwa 25%.

Die Form der Ausnehmung und der Füllung kann dabei eine kreisförmige, eine nierenförmige oder eine andere geeignete Gestalt besitzen. Die Kontur des Füllmaterials ist jedenfalls so ausgebildet, dass es den freien Raum der Ausnehmung vollständig füllt, wodurch die Dichtwirkung der Dichtung aufrechterhalten bleibt. Der Dichtungsgrundkörper und die Füllung besitzen eine reibschlüssige oder eine kraftschlüssige oder eine gesinterte Verbindung.

An den Dichtungsgrundkörper ist bevorzugt eine Erweiterung angeformt, welche im montierten Zustand der Steck- und/oder Lochscheibe aus der Verbindung Flansch - Dichtung - Steck- und/oder Lochscheibe als Anzeigefahne herausragt und mit einer bevorzugt nicht entfernbaren Markierung versehen ist.

Aufgrund dieser Markierung, welche beispielsweise als aus dem Material ausgestanztes Zeichen ausgeführt sein kann, ist sofort leicht erkennbar, dass an dieser Stelle keine elektrisch leitende Kabelverbindung zwischen der Steck- und/oder Lochscheibe und dem Rohr erforderlich ist. Dies ist insbesondere von Bedeutung, wenn an einer Anlage verschiedene Dichtungen, teilweise mit leitenden Einschlüssen, verwendet werden.

Hinsichtlich des Verfahrens zu Herstellung der Dichtung wird die oben genannte Aufgabe erfindungsgemäß dadurch gelöst, dass , indem ein eine Oberseite und eine Unterseite aufweisender, einstückig ausgebildeter Dichtungsgrundkörper aus einem elektrisch isolierenden Material mit dichtender Eigenschaft bereitgestellt, im Dichtungsgrundkörper durch mechanische Bearbeitung eine zwischen Oberseite und Unterseite durchgehende Ausnehmung erzeugt, und in die Ausnehmung eine elektrisch leitende Einlagerung raumfüllend eingefügt wird.

Beim erfindungsgemäßen Verfahren ist somit vorgesehen, dass der Dichtungsgrundkörper in einem separaten Verfahrensschritt vorab erzeugt wird. Anschließend werden in den Dichtungsgrundkörper durch übliche mechanische Bearbeitungsweisen eine oder mehrere Ausnehmungen erzeugt, die sich von der Unterseite zur Oberseite erstrecken. Die Ausnehmung beziehungsweise die Ausnehmungen lassen sich auf diese Art und Weise reproduzierbar und einfach herstellen. Anschließend wird in die Ausnehmungen die elektrisch leitende Einlagerung raumfüllend eingefügt, und darin vorzugsweise formschlüssig oder kraftschlüssig fixiert.

Es hat sich bewährt, wenn die mechanische Bearbeitung der Ausnehmung durch Ausstanzen, Ausfräsen oder Ausbohren erfolgt.

### Ausführungsbeispiel

Im Folgenden wird die Erfindung anhand einer lediglich ein Ausführungsbeispiel darstellenden Zeichnung erläutert.

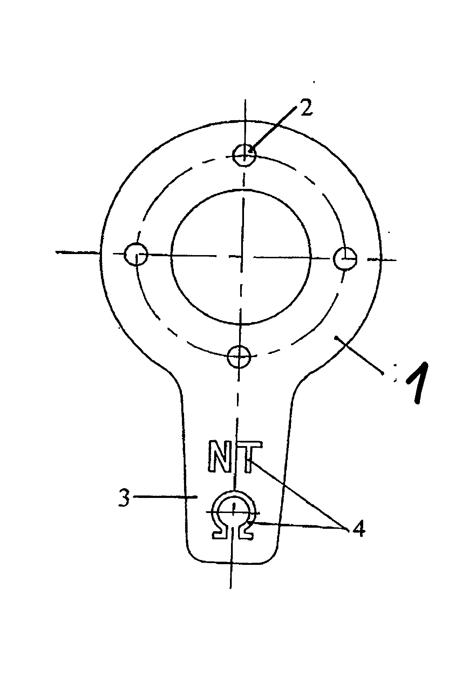

Die einzige Figur zeigt eine erfindungsgemäße Dichtung in Frontalansicht.

Die Dichtung ist als so genannte Flachdichtung mit einer Stärke von ungefähr 2 Millimeter ausgebildet und weist bevorzugt eine angeformte Erweiterung 3 auf. In Umfangsrichtung des Dichtungsgrundkörpers 1 gleichmäßig verteilt sind hier vier kreisförmige Ausnehmungen erkennbar, an welchen das Grundmaterial 1 ausgestanzt und durch eine elektrisch leitfähige Einlage 2 ersetzt wurde. Die Form und Anzahl dieser Einlagen 2 ist in einem weiten Bereich variierbar und wird auf den jeweiligen Einsatzfall optimiert.

Die angeformte Erweiterung 3 besitzt eine bevorzugt nicht entfernbare Markierung 4, mittels welcher im eingebauten Zustand der Dichtung in der Verbindung Flansch - Dichtung - Steck- und/oder Lochscheibe gut erkennbar ist, dass es sich um eine Dichtung mit elektrisch leitenden Einlagerungen 2 handelt. Dadurch ist sicher gestellt, dass das Montagepersonal die elektrische Leitfähigkeit der Dichtung gut erkennen kann und keine Kabelmontage oder Leitfähigkeitsmessung durchführen muss.

Bevorzugt wird diese Markierung 4 in den Körper der Erweiterung 3 durch Ausstanzen des Grundmaterials angebracht.

Die elektrisch leitenden Einlagerungen 2 können so ausgebildet sein, dass sie lediglich formschlüssig in den Ausnehmungen festsitzen. Es ist aber auch denkbar, die Einlagerungen 2 in den Ausnehmungen kraftschlüssig, beispielsweise durch Verklebung zu fixieren. In einer alternativen Ausführung ist die Verbindung zwischen dem Dichtungsgrundkörper 1 und der elektrisch leitenden Einlagerung 2 durch einen Sinterungsprozess herbeigeführt worden.

Der besondere Vorteil dieser erfindungsgemäßen Dichtung liegt darin, dass einerseits die zeitraubende Montage von elektrisch leitenden Kabeln zwischen der Steck- und/oder Lochscheibe und dem Rohr, sowie die anschließend erforderliche Überprüfung der Leitfähigkeit dieser Verbindung vollkommen unterbleiben kann, da die elektrische Verbindung zwischen dem Rohr und der Steck- und/oder Lochscheibe von den elektrisch leitfähigen Einlagerungen übernommen wird und andererseits darin, dass die mit Verletzungsgefahr für die Monteure verbundene Rohrschelle entfallen kann. Die vorliegende Erfindung vermindert damit eine Gesundheitsgefährdung und reduziert erheblich die Rüstzeit der Anlage.

Weiters von Vorteil gegenüber Dichtungen nach dem Stand der Technik ist zu erwähnen, dass auf die Montage der Erdung nicht vergessen werden kann und ein Korrodieren oder locker werden der Erdung nicht möglich ist. Eine Verwechslung der erfindungsgemäßen Dichtung mit herkömmlichen Dichtungen ist insbesondere durch die von Außen gut sichtbare Markierung verhindert.

Mit der Erfindung sind aber nicht nur eine einfachere Handhabung und eine erhöhte Sicherheit verbunden, es sind auch erhebliche Kosteneinsparungen möglich, da die Kosten für Kabel, Schellen etc. ebenso entfallen wie zusätzliche Rüstzeit für die Bereitstellung und Montage der Erdung. Auch der bisher notwendige Zeitaufwand für die regelmäßige Kontrolle der Erdung entfällt.

## Patentansprüche

1. Dichtung zum Einbau zwischen Flanschen einer Flanschverbindung von Rohren, umfassend einen eine Oberseite und eine Unterseite aufweisenden, einstückig ausgebildeten Dichtungsgrundkörper aus einem elektrisch isolierenden Material mit dichtender Eigenschaft, der von mindestens einer elektrisch leitfähigen Einlagerung zwischen Oberseite und Unterseite durchzogen ist, **dadurch gekennzeichnet, dass** der Dichtungsgrundkörper (1) eine ausgestanzte, ausgefräste oder ausgebohrte durchgehende Ausnehmung besitzt, in welche raumfüllend die elektrisch leitende Einlagerung (2) zur Herstellung der elektrisch leitenden Verbindung zwischen einer Oberseite und einer Unterseite eingefügt ist.

2. Dichtung nach Anspruch 1, **dadurch gekennzeichnet, dass** an dem Dichtungsgrundkörper (1) eine von Außen sichtbare Kennzeichnung bezüglich der elektrischen Leitfähigkeit angebracht ist, die vorzugsweise als Erweiterung (3) des Dichtungsgrundkörpers (1) ausgeformt ist.

3. Dichtung nach Anspruch 2, **dadurch gekennzeichnet, dass** an dem Dichtungsgrundkörper (1), vorzugsweise an der Erweiterung (3), eine Markierung (4) zur eindeutigen Identifizierung angebracht ist.

4. Dichtung nach Anspruch 1, 2 oder 3, **dadurch gekennzeichnet, dass** mehrere Ausnehmungen mit entsprechenden Einlagerungen (2) über den Dichtungsgrundkörper (1) vorzugsweise gleichmäßig verteilt sind.

5. Dichtung nach Anspruch 4, **dadurch gekennzeichnet, dass** alle Einlagerungen (2) dieselbe Geometrie aufweisen.

6. Dichtung nach einem der Ansprüche 1 bis 5, **dadurch gekennzeichnet, dass** der Dichtungsgrundkörper (1) aus Kunststoff besteht, vorzugsweise aus Polytetrafluorethylen, gefüllten PTFE-Materialien oder expandiertem PTFE.

7. Dichtung nach einem der Ansprüche 1 bis 6, **dadurch gekennzeichnet, dass** die elektrisch leitende Einlagerung (2) aus elektrisch leitfähigem Material nach FDA-Zulassungsbedingungen besteht.

8. Dichtung nach einem der Ansprüche 1 bis 6, **dadurch gekennzeichnet, dass** die elektrisch leitende Einlagerung (2) aus leitfähigem PTFE-Kunststoff, bevorzugt mit eingelagertem Kohlenstoff besteht.

9. Dichtung nach Anspruch 8, **dadurch gekennzeichnet, dass** der Anteil des eingelagerten Kohlenstoffes in der Einlagerung (2) bei etwa 25% liegt.

10. Dichtung nach einem der Ansprüche 1 bis 9, **dadurch gekennzeichnet, dass** die Form der Ausnehmung und die Form der Einlagerung (2) kreisflächenförmig oder nierenförmig ist.

11. Dichtung nach einem der Ansprüche 1 bis 10, **dadurch gekennzeichnet, dass** der Dichtungsgrundkörper (1) und die elektrisch leitfähige Einlagerung (2) eine reibschlüssige oder eine kraftschlüssige Verbindung aufweisen.

12. Dichtung nach einem der Ansprüche 1 bis 10, **dadurch gekennzeichnet, dass** der Dichtungsgrundkörper (1) und die elektrisch leitfähige Einlagerung (2) eine durch einen Sinterungsprozess herbeigeführte Verbindung aufweisen.

13. Verfahren zur Herstellung einer Dichtung zum Einbau zwischen Flanschen einer Flanschverbindung von Rohren, indem ein eine Oberseite und eine Unterseite aufweisender, einstückig ausgebildeter Dichtungsgrundkörper aus einem elektrisch isolierenden Material mit dichtender Eigenschaft bereitgestellt, im Dichtungsgrundkörper durch mechanische Bearbeitung eine zwischen Oberseite und Unterseite durchgehende Ausnehmung erzeugt, und in die Ausnehmung eine elektrisch leitende Einlagerung (2) raumfüllend eingefügt wird.

14. Verfahren nach Anspruch 13, **dadurch gekennzeichnet, dass** die Ausnehmung
durch Ausstanzen, Ausfräsen oder Ausbohren erzeugt wird.

15. Verfahren nach Anspruch 13 oder 14, **dadurch gekennzeichnet, dass** die Einlagerung (2) in der Ausnehmung formschlüssig oder kraftschlüssig oder durch einen Sinterungsprozess fixiert wird.
